# EUROPEAN PATENT APPLICATION

(11) **EP 2 392 526 A1**
(43) Date of publication of application: **07.12.2011**
(21) Application number: 11167960.1
(22) Date of filing: 27.05.2011
(51) Int. Cl.: B65G 1/127, B65G 17/18

(54) **An industrial storage plant for objects**

(30) Priority: 03.06.2010 IT RE20100046
(71) Applicant: CPM Handling Technology S.R.L., 42124 Reggio Emilia (IT)
(72) Inventor: Gherri, Alessandro, 42124 REGGIO EMILIA (IT)
(74) Representative: Corradini, Corrado

(57) **Abstract**

An industrial storage plant, comprising a large container-buffer (M) having a plurality of platforms (10) each destined to restingly bear one or more objects, and a movement system which activates the plurality of platforms (10) to move in a trajectory which develops in a vertical and longitudinal plane, and at least a loading/unloading device of the objects (40) which is destined to load/unload at least a load of the objects at a time onto/from a single platform. The movement system comprises a motorised line (20) of conveyor chains, which develop in a closed ring along a trajectory which runs on a vertical plane, which transports, in a contemporary movement, the plurality of platforms (10). The container-buffer (M) is able to store a relatively very high number of objects; moreover, it can be used to exploit to the full an internal height of industrial buildings.

## Description

The invention relates to an industrial storage plant for objects, able to operate in a discontinuous mode.

The plant is typically used for temporarily storing objects weighing between 5 and 30 Kg, and in particular for coordinating lines having different productive potential and/or rhythms.

The prior art comprises temporary storage systems (buffers) of objects which comprise numerous tracts of conveyor line set on the ground, parallel to one another, which define zones of various plan sizes on which objects are carried in order to park the objects temporarily before being collected and returned to the productive cycle; all of the foregoing being organised in various ways, with the aim of compensating productive stages having different potentials and rhythms.

The known systems however exhibit the drawback of requiring very large floor areas, and therefore they occupy relevant spaces in the industrial buildings where the production stages take place.

An aim of the invention is to realise a storage plant which can develop vertically, thus occupying an extremely small plan area.

A further aim of the invention is to realise a storage plant which is constructionally simple and economical and functions effectively.

This and other aims are attained by the present invention as it is characterised in the claims.

The invention is set out in detail in the following description, made with reference to the accompanying figures of the drawings, by way of non-limiting example, of a preferred embodiment.

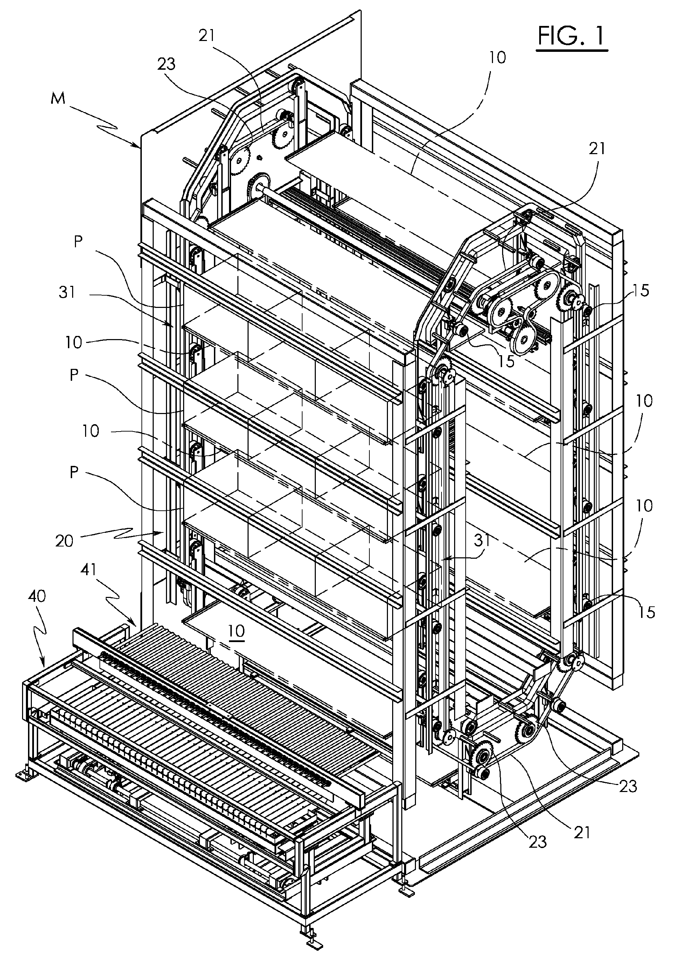

Figure 1 is a general view of the plant, with some parts removed better to evidence others; the fixed roller plane 51 is not illustrated;

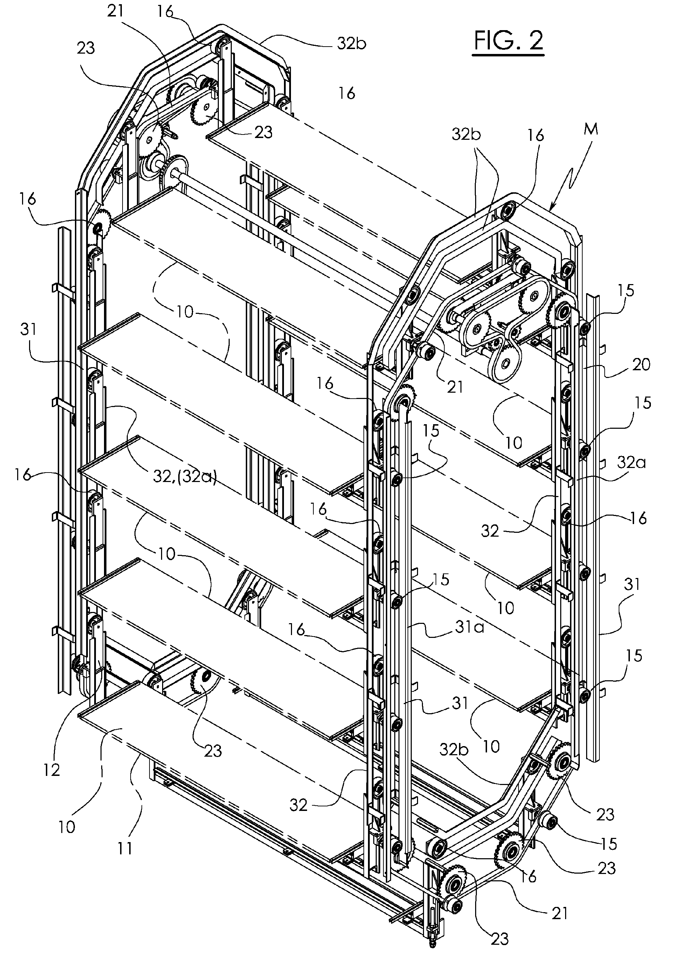

figure 2 is a simplified general view as in figure 1, of only the buffer M;
figure 2A is an enlarged detail of figure 2;
figure 3 is the loading platform of figure 1;
figure 4 is a frontal view of figure 3;

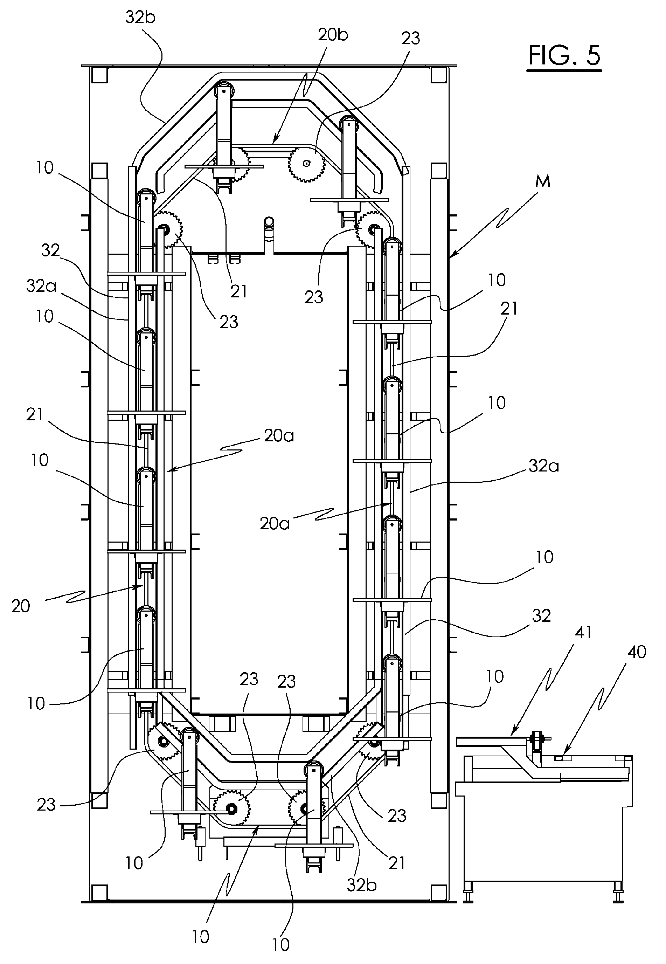

figure 5 is a side view of figure 1;
figure 6 is a side view of the loading/unloading device 40;
figures from 7A to 7D are four successive stages of the loading/unloading device of figure 6, where:
figure 7A is the same view as in figure 6, during the tract of trajectory R1;
figure 7B is an enlarged section of plane B-B of figure 7A during the tract of trajectory R2;
figure 7C is the same view as in figure 7A, during the tract of trajectory R6;
figure 7D is an enlarged section along plane D-D of figure 7C during the tract of trajectory R4.

The illustrated storage plant comprises a large container-buffer M, able to contain a relatively large number of objects P placed on platforms 10 and a loading/unloading device 40 of the objects, destined to load/unload at least a load of objects P at a time onto and of a single platform 10, wherein a load of objects is constituted by one or more objects, typically placed side by side to one another to form at least a layer.

The buffer M comprises a plurality of platforms 10 which each bring a load of objects P to rest on the loading plane 11.

The buffer M further comprises a movement system which activates the plurality of platforms M to move in a trajectory which develops in a vertical and longitudinal plane.

The movement system comprises a motorised continuous conveyor line 20, in particular comprising two chains 21, each of which winds sufficiently tightly about a plurality of cog wheels 23 for chains, defining a closed ring which develops along a trajectory which runs on a vertical and longitudinal plane, and which contemporaneously transports the plurality of platforms 10.

In particular, the conveyor line 20 comprises two straight vertical tracts 20a which define the majority of the trajectory, and two connecting tracts 20b along which the trajectory inverts its direction, which join up the two vertical tracts 20a.

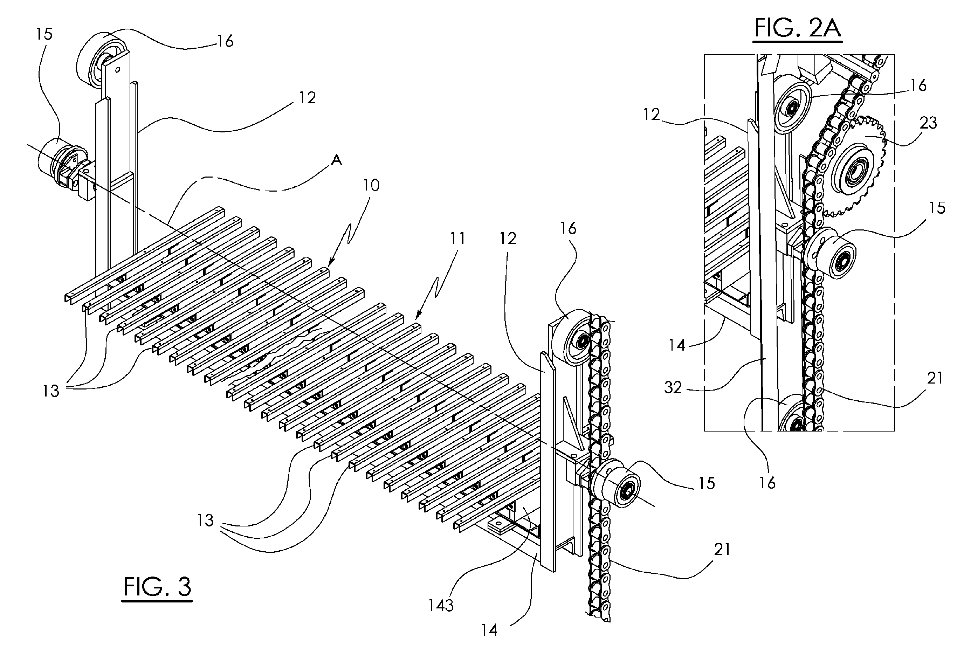

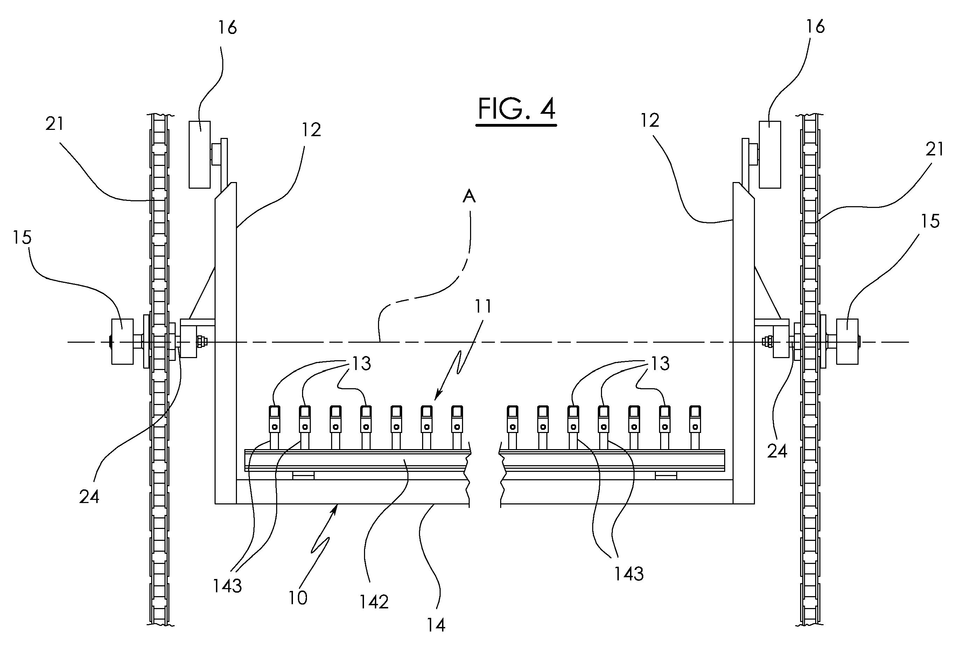

The platforms 10 are hinged to the conveyor line 20 such as to oscillate about a transversal horizontal axis A (i.e. directed from a chain 21 to the other) (figures 3, 4).

In a preferred embodiment (though not exclusive), the platforms 10 comprise a horizontal rest plane 11 having such an extension as to restingly support a load of objects P located side-by-side; two vertical columns 12 are fixed on the two lateral flanks of the plane 11 (i.e. the two ends located close to the respective chain 21), which are in turn hinged to the chains 21, in particular the vertical columns 12 are constrained to the chains 21 by horizontal and transversal pins 24, solidly constrained to the chains 21 and coaxial with the wheels (figure 4). The two lower ends of the columns 12 are solidly fixed to the ends of a horizontal and transversal beam 14 which supports the loading plane 11.

The axis A is arranged in a superior position to the centre of gravity determined by the weight of the platform 10 and its weight, such that the platform tends naturally to maintain a position of constant equilibrium in which the plane 11 is horizontal along each tract of the trajectory thereof along the line 20.

It is preferable that at least a line of rails run along at least part of the trajectory of the line 20, which rails are destined to keep the platforms 10 guided and maintain the rest plane 11 of the objects in a horizontal position. Two parallel lines of rails 31 and 32 are preferably provided, interacting with two respective idle wheels 15 and 16 hinged on each of the vertical columns 12, at points at a distance from one another along the same column 12.

In particular, the wheels 15 are coaxial to the axis A of the hinge of the respective platform 10.

The guide rails 31, 32 have vertical straight tracts 31 a, 32a which guide the wheels 15 and respectively the wheels 16 along the vertical tracts 20a of the trajectory and any connecting tracts 31 b (not shown in the figures), 32b which guide the wheels 15, 16 along the connecting tracts 20b of the trajectory. Thanks to the presence of the two wheels 15, 16, both driven, the platforms maintain a predetermined and stable position, even in the presence of nudges against them which would tend to change the orientation of the planes 11.

The rest plane 11 is formed by a plurality of first bars 13 which are straight, horizontal, longitudinal and parallel to one another, and are supported by and solidly constrained to the beam 14. The collective upper surface of the bars 13 forms the rest plane of the objects on the plane 11.

The loading/unloading device 40 comprises a comb-shaped translator tool 41 for transferring the objects P onto/off the platform. The device 40 comprises a plurality of second bars 42, also straight, horizontal, longitudinal and parallel to one another as well as being parallel to the first bars 13, and are supported by a plurality of mobile support elements 43, solidly constrained to one another. The elements 43 are the same in number as the second bars 42, and each element 43 projectingly supports a bar 42, at a portion thereof that projects towards the buffer M. The thickness in a horizontal direction of the end is such as not to extend transversally beyond the respective bar 42. The second bars 42 are destined to insert in the interstices between the first bars 13 of the plane 11, and define, with the upper surface thereof, a rest plane for the objects which has the same shape and an extension that is substantially the same as that of the rest plane defined by the bars 13.

In detail, in the embodiment illustrated in the figures, the bars 13 are fixed to a transversal second beam 142, fixed on the beam 14 and parallel thereto; each bar 13 is fixed to the beam 142 by a support plate 143 functioning as a pedestal, the main plane of which develops in the same vertical plane identified by the bar 13 (figures 3 and 4); this configuration is such that the distance in a vertical direction between the rest plane defined by the bars 13 and the transversal beam which supports the bars (which in this case is the beam 142 but might directly be the beam 14) is greater than the vertical thickness of the second bars 42.

This is such as to enable the second bars 42 to insert between the first bards 13 and to descend with the rest plane thereof to a lower level than the rest plane of the bars 13.

The device 40 further comprises a device for moving the comb translator tool 41 along a rectangular trajectory R which takes place in a longitudinal vertical plane, parallel to the bars 13 and 42.

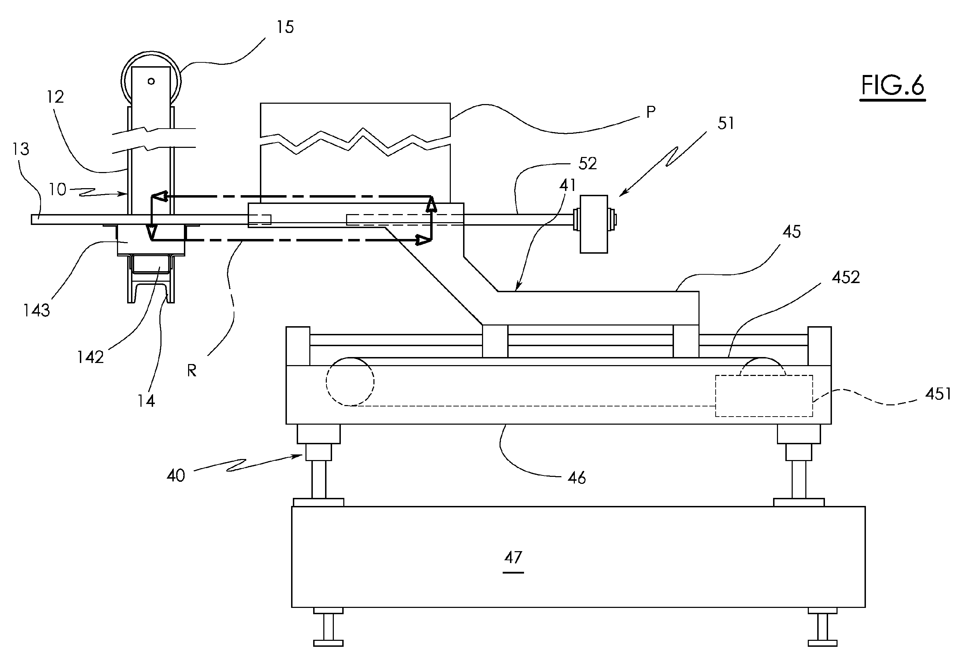

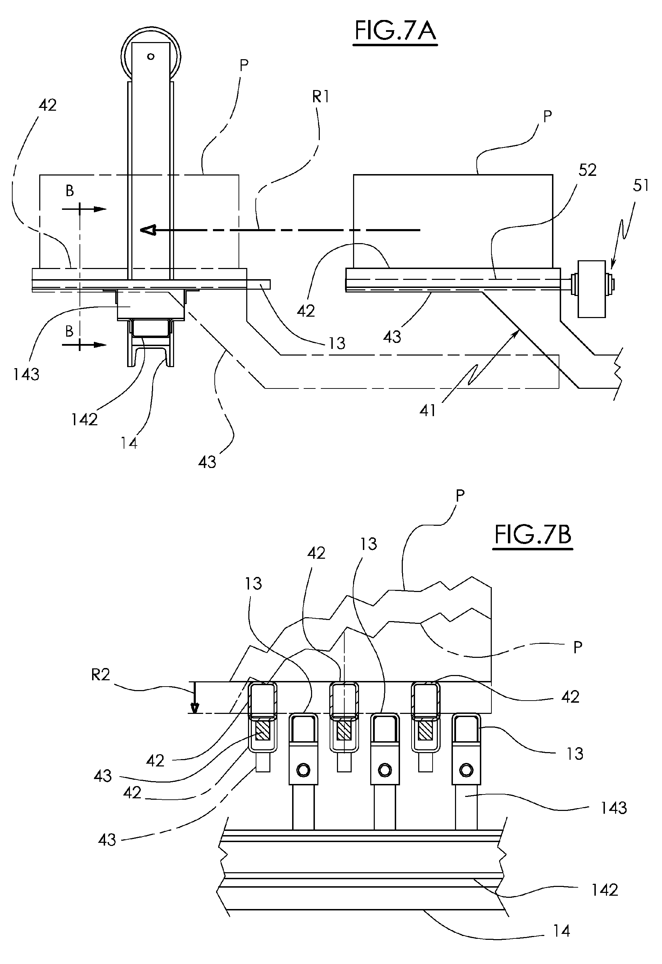

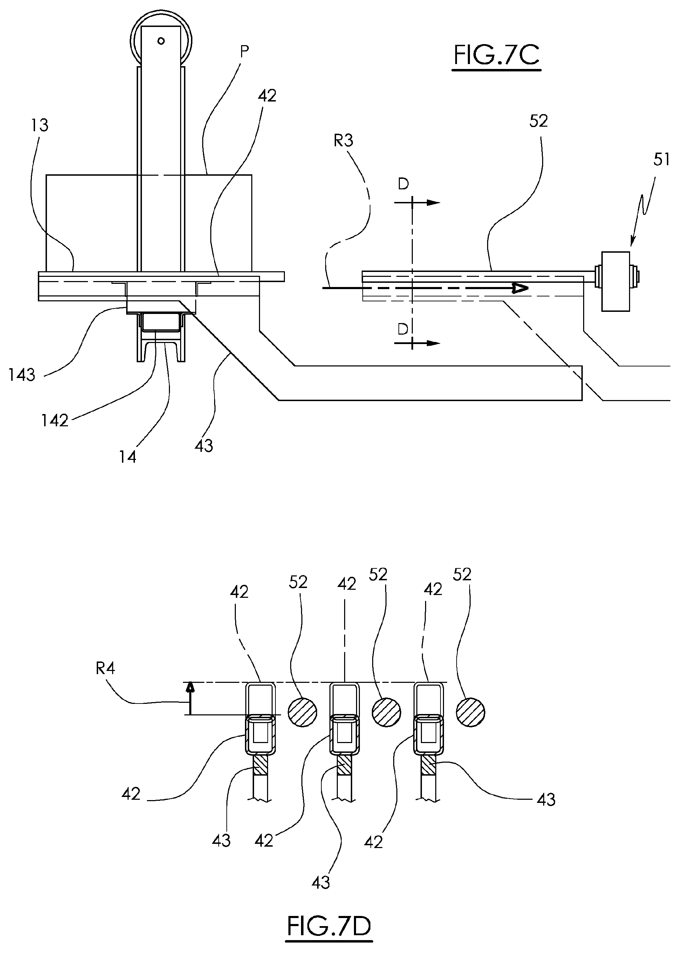

If the device 40 is in the stage of loading the objects P on a platform, the trajectory R of the translator tool 41 comprises (see figures 6 and 7A-7D):
a horizontal first tract R1 moving towards the plane 11 of the platform 10, in which the rest plane of the second bars 42 moves at a higher level than the plane of the first bars 13, up to completely superposing the plane of the first bars 13 (figure 7A);
a downwards-inclined second tract R2, wherein the rest plane of the second bars 42 is brought to a lower level that the rest plane of the first bars 13, such as to release the objects P to rest on the first bars 13 (figure 7B);
a returning horizontal third tract R3, in which the second bars 42 exit from the spaces between the first bars 13, maintaining the rest plane of the second bars 42 at a lower level than that of the first bars 13 (figure 7C); and an upwards-inclined fourth tract R4, which raises the rest plane of the second bars 42 to a slightly higher level than the rest plane of the first bars 13.

The trajectory R and the respective tracts R1-R4 illustrated in the figures are the trajectory which a point of the translator tool 41 or a point solidly constrained thereto performs. Figure 6 denotes with the letter R the trajectory performed by the median point of the profile of the rest lane of the bars 42; in figure 7A, R1 denotes the trajectory described by the point at the centre of gravity of the object P; in figures 7B and 7D, the R2 and R4 denote the vertical trajectory performed by the rest plane of the bars 42; in figure 7D, R3 denotes the trajectory described by the point of the centre of gravity of the bar 42.

When the device 40 operates to unload the objects from a platform 10, the rectangular movement R is inverted with respect to the loading direction as described herein above.

To actuate this movement along a rectangular trajectory R the device destined to move the translator tool 41 comprises a first slide 45, which bears the translator tool 41 and a second slide 46 which bears the first slide 45. The first slide 45 has a longitudinal horizontal movement (parallel to the bars 13, 42) produced by a motor 451 which activates a transmission belt 452 forwards and backwards with respect to the second slide 46, such as to move the tool 41 in an alternative horizontal motion which defines the first tract R1 and the third tract R3 of the rectangular trajectory R.

The second slide 46 moves vertically up and down, with respect to a support 47, produced for example by a cam mechanism (not illustrated) such as to move the first slide 45 and with it the tool 41 in a corresponding alternative vertical movement which defines the second tract R2 and the fourth tract R4 of the rectangular trajectory. The coordination of these movements realise the desired rectangular movement R in a direction or in another.

The plant of the invention further comprises a fixed roller plane 51, destined to support and move objects P, having rollers 52 parallel to the bars 42 of the translator tool 41, located projectingly and located on the rectangular trajectory R of the tool 41. More precisely, the rest plane of the roller plane 51 is stationary and is located at an intermediate level between the upper position 41 and the lower position assumed by the rest plane of the translator tool 41 during the fourth tract R4,and the rollers 52 are arranged in such a position that the second bars 42 pass along the interstices between the rollers 52 during the fourth tract R4.

In operation, the objects P to be stored are inserted and alternatively extracted from the container-buffer M by means of the loading/unloading device 40. The container-buffer M is usually in an inactive condition (the platforms 10 are stationary) and are only moved when it is necessary to load and/or unload one or more of the platforms.

One loading/unloading device 40 alone can be comprised, which serves to alternatively load and unload the objects P onto and from the platforms 10. The loading of the objects on the platforms 10 is done in the following way.

An empty platform 10 is stopped in a loading position (constant) at the loading/unloading device 40.

The objects to be loaded arrive on the fixed roller plane 51 and from here, by means of the above-described rectangular movement of the tool 41, they are removed in layers (i.e. several flanked objects, in various ways) from the roller plane 51 and transferred onto a platform 10 that is stationary in the loading/unloading station.

Once loaded on the platform 10, the conveyor line 20 moves by a step (or more steps) to bring another empty platform 10 into the loading position. The unloading of the objects from the platforms 10 is done inversely to what has been described for the loading process.

A plurality of loading/unloading devices 40 can be comprised and can function as a dedicated means for loading objects onto the platforms or as a dedicated means for unloading objects from the platform, or as means alternatively able to perform the loading and unloading stages of the objects onto and from the platforms 10.

The flexibility and functioning of the buffer is at very high levels, as the movement of the line 20 can occur in both directions and the number of steps between a halt and a successive halt can be varied; thus different types of objects can be manipulated, with different modalities.

The container-buffer M is able to store a relatively very high number of objects: naturally the storage capacity depends greatly on the general dimensions of the container-buffer M itself, and in particular on its height, which can be freely decided by the designer.

Moreover, the whole internal height of an industrial building can be exploited
- a dimension usually under-used; the result is that the plan surface occupied by the buffer is reduced.

Obviously numerous modifications of a practical-applicational nature can be brought to the present invention, without its forsaking the ambit of the inventive idea as claimed herein below.

## Claims

1. An industrial storage plant, **characterised in that** it comprises:
a large container-buffer (M) having a plurality of platforms (10) each destined to restingly bear one or more objects (P), and a movement system which activates the plurality of platforms (10) to move in a trajectory which develops in a vertical and longitudinal plane, and
at least a loading/unloading device of the objects (40) which is destined to load/unload at least a load of the objects (P) at a time onto/from a single platform.

2. The plant of claim 1, **characterised in that** the movement system comprises a motorised line (20) of conveyor chains, which develop in a closed ring along a trajectory which runs on a vertical plane, and which in a contemporary movement transports the plurality of platforms (10).

3. The plant of claim 2, **characterised in that** the platforms (10) are hinged to the conveyor line (20) and can oscillate about a horizontal transversal axis (A), and the plant comprises at least a line of rails (31, 32) destined to maintain the platforms (10) guided along at least a part of the trajectory of the line (20), with the rest plane (11) of the objects in a horizontal position along at least a part of the trajectory defined by the conveyor line (20).

4. The plant of claim 3, **characterised in that** the container-buffer (M) comprises two rail lines (31, 32) which are parallel and which interact with two respective idle wheels (15, 16) hinged on each of the vertical columns (12) at points that are distant from one another along the column (12).

5. The plant of claim 1, **characterised in that** each platform (10) comprises a rest plane (11) formed by a plurality of first bars (13) which are straight, horizontal, longitudinal and parallel to one another, an upper surface of which plurality of first bars (13) defines the rest plane of the objects (P) on the platforms (10), and further the loading/unloading device (40) comprises a translator tool (41) having a comb-tooth configuration for transferring the objects (P) onto/from the platform (10), having a plurality of second straight bars (42), which are horizontal, longitudinal and parallel to one another, destined to insert into interstices between the first bars (13), a vertical distance between the rest plane defined by the bars (13) and the transversal beam (14, 142) which supports the bars being greater than a vertical thickness of the second bars (42) and a support (43) thereof, if present.

6. The plant of claim 5, **characterised in that** the loading/unloading device comprises a device destined to move the translator tool (41) with a movement along a rectangular trajectory (R), which during the loading stage of objects onto a platform comprises:
a horizontal first tract (R1) moving towards the plane (11 ) of the platform (10),
in which the rest plane of the second bars (42) moves at a higher level than the plane of the first bars (13), up to completely superposing the plane of the first bars (13) (figure 7A);
a downwards-inclined second tract (R2), wherein the rest plane of the second bars (42) is brought to a lower level that the rest plane of the first bars (13), such as to release the objects (P) to rest on the first bars (13) (figure 7B);
a returning horizontal third tract (R3), in which the second bars (42) exit from the spaces between the first bars (13), maintaining the rest plane of the second bars (42) at a lower level than that of the first bars (13) (figure 7C); and
an upwards-inclined fourth tract (R4), which raises the rest plane of the second bars (42) to a slightly higher level than the rest plane of the first bars (13);
and, during a stage of unloading the objects (P) from a platform, the rectangular movement is inverted with respect to a direction thereof during a loading stage.

7. The plant of claim 6, **characterised in that**:
the device for moving the translator tool (41) comprises a first slide (45), which bears the translator tool (41) and a second slide (46) which bears the first slide (45),
the first slide (45) having a horizontal longitudinal movement, activated by a motor, having a forwards and backwards movement with respect to the second slide (46), such as to move the tool (41) in a corresponding alternative horizontal motion which defines the first tract (R1) and the third tract (R3) of the rectangular trajectory (R);
the second slide (46) having an motorised up-and-down vertical movement such as to move the first slide and with it the tool (41) in a corresponding alternative vertical motion which defines the second tract (R2) and the fourth tract (R4) of the rectangular trajectory.

8. The plant of claim 6, **characterised in that** the loading/unloading device (40) comprises a fixed roller plane (51), destined to support and move objects (P), located on the rectangular trajectory of the translator tool (41 ), having rollers (52) located projectingly, parallel to the second bars (42) and arranged in such a position that the second bars (42) pass through the interstices of the rollers (52) during the fourth tract (R4) of the rectangular trajectory, the rest plane of the roller plane (51 ) being stationary at an intermediate level between the upper position and the lower position assumed by the rest plane of the translator tool (41) during the fourth tract (R4).
